# EUROPÄISCHE PATENTSCHRIFT

(11) **EP 1 014 883 B1**
(45) Veröffentlichungstag und Bekanntmachung des Hinweises auf die Patenterteilung: **01.10.2003**
(21) Anmeldenummer: 98928286.8
(22) Anmeldetag: 18.05.1998
(51) Int. Cl.: A61C 8/00

(54) **DENTALIMPLANTAT SOWIE VORRICHTUNG MIT EINEM DENTALIMPLANTAT**
DENTAL IMPLANT AND DEVICE WITH A DENTAL IMPLANT
IMPLANT DENTAIRE ET DISPOSITIF MUNI D'UN IMPLANT DENTAIRE

(30) Priorität: 24.05.1997 CH 121997
(43) Veröffentlichungstag der Anmeldung: 05.07.2000
(73) Patentinhaber: Sutter, Franz, Dr.h.c., 4435 Niederdorf (CH)
(72) Erfinder: Sutter, Franz, Dr.h.c., 4435 Niederdorf (CH)
(74) Vertreter: Eder, Carl E.
(86) Internationale Anmeldenummer: EP9802905
(87) Internationale Veröffentlichungsnummer: WO98052488

(56) Entgegenhaltungen:
- EP-A- 0 475 299
- EP-A- 0 685 208
- DE-A- 4 127 839
- DE-C- 19 534 979
- DE-U- 9 202 396
- FR-A- 2 733 144

## Beschreibung

### Technisches Gebiet

Die Erfindung betrifft ein Dentalimplantat. Das Implantat kann als enossales Implantat verwendet und in einen Kieferknochen eines Unter- oder Oberkiefers eingesetzt werden. Am Implantat kann ein Sekundärteil befestigt werden, der zum Halten und/oder Aufbauen eines Zahnersatzes, d. h. eines künstlichen Einzelzahns oder einer mehrere künstliche Zähne aufweisenden Prothese, dient. Das Implantat kann ferner zum Halten eines speziellen Aufbauteils dienen, der beispielsweise einen ganzen künstlichen Einzelzahn bildet.

### Stand der Technik

Eine aus der DE 41 27 839 A bekannte Vorrichtung besitzt ein Implantat und einen Sekundär- bzw. Halteteil. Das Implantat hat ein axiales Sackloch mit einem Mehrkantabschnitt. Der Sekundärteil hat einen in den Mehrkantabschnitt des Sacklochs passenden Mehrkantabschnitt. Die Mehrkantabschnitte sind als Zwölfkantabschnitte ausgebildet, so dass der Sekundärteil wahlweise in einer von 12 Drehstellungen positioniert, d.h. drehfest mit dem Implantat verbunden werden kann. In vielen Fällen wäre es jedoch wünschenswert, wenn der Sekundärteil nur in einer einzigen, eindeutig definierten Drehstellung mit dem Implantat verbindbar wäre. Ferner ergeben die ineinander steckbaren Zwölfkantabschnitte wegen des erforderlichen Spiels nur eine relativ ungenaue Definition der Drehstellung. Der Mehrkantabschnitt des Sacklocks ist ziemlich lang und erstreckt sich bis zum Mündung des Sacklochs, so dass der Sekundärteil oberhalb des Sacklochs nirgends genau und gut geführt ist. Zudem wird der Sekundärteil im Implantat verklebt und kann danach nicht mehr aus diesem herausgenommen werden.

Eine aus der EP 0 685 208 A bekannte Vorrichtung besitzt ebenfalls ein Implantat und einen Sekundärteil. Das Implantat hat eine Achse und ein zu dieser koaxiales Loch, das einen konischen Abschnitt und ein Innengewinde aufweist. Der Sekundärteil kann teilweise in das Loch des Implantats eingesetzt werden und hat ein in dessen Innengewinde einschraubbares Aussengewinde. Der Sekundärteil wird beim Einschrauben in das Implantat um die Achse gedreht, bis er mit einem konischen Abschnitt am konischen Abschnitt des Lochs anliegt. Die sich in zusammengeschraubten Zustand ergebende Drehstellung des Sekundärteils bezüglich der Achse hängt dabei von den Fabrikationstoleranzen und vom Drehmoment ab, mit dem der Sekundärteil in das Implantat eingeschraubt wird. Dieses Implantat ermöglicht also keine genaue Festlegung der Drehstellung eines in das Loch des Implantats hineinragenden Sekundärteils.

Aus der DE 195 34 979 C ist eine Vorrichtung mit einem Implantat und einer Distanzhülse bekannt. Das Implantat hat ein axiales Sackloch. Dessen Innenfläche ist mit sechs um die Achse des Implantats herum verteilten Nuten versehen. Die Distanzhülse ragt in das Sacklock des Implantat hinein und hat in dessen Nuten eingreifende Nasen, so dass die Distanzhülse in sechs verschiedenen Drehstellungen im Implantat positioniert werden kann. Dieses Implantat definiert also auch keine einzelne, eindeutige Drehstellung. Zudem ist die Distanzhülse nur in einem kurzen, einen relativ kleinen Durchmesser aufweisenden, zylindrischen Führungsbereich des Lochs unterhalb der Nuten seitlich geführt und gegen ungefähr quer zur Achse des Implantats gerichtete Kräfte abgestützt. Wenn solche Kräfte auf einen von der Distanzhülse gehaltenen Zahnersatz einwirken, ergibt sich zwischen der Angriffsstelle dieser Kräfte und dem Führungsbereich des Lochs ein langer Hebelarm, so dass beim Führungsbereich des Sacklochs sehr grosse Drehmomente von der Distanzhülse auf das Implantat übertragen werden müssen. Dies ergibt in Kombination mit den kleinen Abmessungen des Führungsbereichs eine grosse Gefahr, dass der Zahnersatz bei Belastungen kleine Bewegungen - sogenannte Mikrobewegungen - bezüglich des Implantats ausführt und dadurch ein Misserfolg der zahnmedizinischen Behandlung verursacht wird.

### Abriss der Erfindung

Der Erfindung liegt daher die Aufgabe zugrunde, ein Dentalimplantat zu schaffen, das Nachteile der bekannten Implantate behebt und insbesondere ermöglicht, einen Sekundär- und/oder Aufbauteil - abhängig von dessen Ausbildung und vorgesehener Verwendung - in nur einer einzigen, eindeutig definierten Drehstellung oder in einer aus mehreren möglichen Drehstellungen auswählbaren Drehstellung unverdrehbar oder in einer beliebigen Drehstellung mit dem Implantat zu verbinden.

Diese Aufgabe wird erfindungsgemäss gelöst durch ein Dentalimplantat mit einer Achse und einem zu dieser koaxialen Loch zum Befestigen eines Sekundär- und/oder Aufbauteils, wobei das Loch einen Positionierungsabschnitt mit um die Achse herum abwechselnd aufeinanderfolgenden Vorsprüngen und Zwischenräumen aufweist und wobei das Dentalimplantat dadurch gekennzeichnet ist, dass die Zwischenräume mehrere erste, gleich bemessene Zwischenräume und einen zweiten Zwischnraum aufweisen, der in mindestens einer Richtung eine grössere Abmessung hat als die ersten Zwischenräume.

Die Erfindung betrifft ferner eine Vorrichtung mit einem Dentalimplantat und mit einem Sekundär- und/oder Aufbauteil, wobei die Vorrichtung gemäss der Erfindung dadurch gekennzeichnet ist, dass der Sekundär- und/oder Aufbauteil einen zum Hineinragen in das Loch des Implantats bestimmten und in diesem befestigbaren Verbindungsabschnitt besitzt.

Vorteilhafte Weiterbildungen des Implantats und der Vorrichtung gehen aus den abhängigen Ansprüchen hervor.

Die ersten und zweiten Zwischenräume des erfindungsgemässen Dentalimplantats ermöglichen, an ein und demselben Implantat wahlweise unterschiedlich ausgebildete Sekundär- und/oder Aufbauteile zu befestigen, die abhängig von ihrer Ausbildung nur eine einzige durch den Positionierungsabschnitt des Implantats definierte Drehstellung einnehmen können oder die eine aus mehreren möglichen Drehstellungen auswählbare Drehstellung einnehmen können oder deren Drehstellung durch den Positionierungsabschnitt nicht definiert wird.

Das Implantat ist vorzugsweise länglich und im allgemeinen rotationssymmetrisch zu seiner Achse. Das Loch ist vorzugsweise als Sackloch ausgebildet und hat eine sich an einem Ende des Implantats befindende Mündung. Jeder Zwischenraum des Implantats ist vorzugsweise gerade und parallel sowie symmetrisch zu einer Ebene, die durch die genannte Achse und durch die Mitte der betreffenden Nut verläuft. Der Positionierungsabschnitt des Implantats ist ferner beispielsweise im allgemeinen zylindrisch, so dass die zwischen den Zwischenräumen des Implantats vorhandenen Vorsprünge in einer zylindrischen, zur Achse koaxialen Fläche liegende Scheitel haben. Der Positionierungsabschnitt des Implantats kann jedoch eventuell statt zylindrisch im allgemeinen konisch sein, sich von der Mündung des Lochs weg verjüngen und die Zwischenräume voneinander trennende Vorsprünge mit Scheiteln haben, die in einer konischen Fläche liegen.

Der Positionierungsabschnitt des Implantats definiert vorzugsweise sowohl bei im allgemeinen zylindrischer auch bei im allgemeinen konischer Form einen Teilkreis, der zur Achse koaxial ist und sich an die Scheitel der Vorsprünge des Implantats anschmiegt. Bei einer bevorzugten Ausführungsform ist der zweite Zwischenraum breiter und/oder tiefer als die ersten Zwischenräume. Die einander benachbarten, ersten Zwischenräume haben entlang dem Teilkreis gemessene, gleiche Entfernungen voneinander und definieren zusammen eine Teilkreis-Teilung oder - kurz gesagt - Teilung. Zur Klarstellung sei noch angemerkt, dass die Teilung gleich dem n-ten Teil eines vollen Kreises ist, wobei n eine ganze Zahl ist und vorzugsweise mindestens 6, besser mindestens 10 und zum Beispiel höchstens 72 beträgt. Der zweite, breitere und/oder tiefere Zwischenraum hat eine entlang dem Teilkreis gemessene Abmessung, die vorzugsweise grösser als eine Teilung, zum Beispiel ungefähr oder genau gleich der Summe von der entlang dem Teilkreis gemessenen Abmessung eines ersten Zwischenraums und von einer ganzen Teilung oder mehreren ganzen Teilungen ist.

Ein zum Befestigen am Implantat vorgesehener Sekundärteil kann einen Innenabschnitt bzw. Verbindungsabschnitt und einen Aussen- bzw. Kopfabschnitt aufweisen. Wenn der Sekundärteil am Implantat befestigt ist, befinden sich der Innen- bzw. Verbindungsabschnitt im Loch des Implantats und der Aussen- bzw. Kopfabschnitt ausserhalb des Implantats. Der Sekundärteil kann abhängig von der vorgesehenen Verwendung und der medizinischen Indikation unterschiedlich ausgebildet sein. Der Innen- bzw. Verbindungsabschnitt des Sekundärteils kann beispielsweise einen Positionierungsabschnitt mit entlang seinem Umfang verteilten Vorsprüngen aufweisen, die durch Zwischenräume voneinander getrennt sind. Wenn der Sekundärteil am Implantat befestigt ist, können die Vorsprünge des Implantats und des Sekundärteils dann in Zwischenräume des jeweils andern Teils eingreifen und dadurch eine Drehstellung des Sekundärteils bezüglich Drehungen um die vom Loch des Implantats definierte Achse festlegen. Bei einer möglichen Ausführungsform des Sekundärteils können alle Vorsprünge des Sekundärteils gleiche Formen und Abmessungen haben, so dass der Sekundärteil in verschiedenen Drehstellungen am Implantat befestigt werden kann. Die Drehstellung des Sekundärteils ist also wählbar und stufenweise veränderbar, wobei jede wählbare Drehstellung durch die ineinander eingreifenden Vorsprünge und Nuten des Implantats und Sekundärteils definiert ist und wobei der Drehwinkel zwischen den einander benachbarten Drehstellungen gleich dem durch die Teilung der gleich ausgebildeten (ersten) Zwischenräume festgelegten Teilungswinkel ist. Diese Verbindungsweise eines Sekundärteils mit dem Implantat wird im folgenden auch als Multipositionierung des Sekundärteils bezeichnet.

Der Sekundärteil kann ferner einen Vorsprung aufweisen, der in mindestens einer Richtung eine grössere Abmessung hat als die ersten Zwischenräume des Implantats und derart ausgebildet ist, dass er in dem zweiten Zwischenraum, nicht aber in die ersten Zwischenräume des Implantats eingreifen kann. Dieser Vorsprung des Sekundärteils kann insbesondere breiter sein als die ersten Zwischenräume des Implantats und/oder eine Höhe haben, die grösser ist als die radiale Tiefe der ersten Zwischenräume des Implantats. Der Positionierungsabschnitt des Sekundärteils besitzt dann vorzugsweise zusätzlich zum genannten Vorsprung noch schmälere Vorsprünge zum Eingreifen in die schmäleren, ersten Zwischenräume des Implantates, kann aber eventuell nur gerade den in den zweiten, breiteren und/oder tieferen Zwischenraum des Implantats eingreifenden Vorsprung aufweisen. Der Sekundärteil kann dann bezüglich Drehungen um die vom Implantat definierte Achse nur in einer einzigen Drehstellung mit dem Implantat verbunden werden. Diese Verbindungsweise eines Sekundärteils mit dem Implantat wird im folgenden auch als Einzelpositionierung des Sekundärteils bezeichnet.

Der Sekundärteil kann jedoch auch ohne Positionierungsabschnitt hergestellt werden und so ausgebildet sein, dass er beim Einsetzen in das Loch des Implantats und nach der Befestigung an diesem nicht in die Zwischenräume des Implantats eingreift. Der Sekundärteil ist dann beim Einsetzen in das Loch des Implantats kontinuierlich drehbar, bis der Sekundärteil am Implantat befestigt ist.

Jeder Zwischenraum des Implantats ist vorzugsweise mindestens zum Teil durch Flächenabschnitte begrenzt, die ungefähr oder genau parallel zu einer radial zur Achse durch die Mitte des betreffenden Zwischenraums verlaufenden Geraden sind oder mit einer solchen Geraden einen Winkel von höchstens 60° und vorzugsweise höchstens 45° bilden. Ferner hat jeder Zwischenraum zum Beispiel zwei im wesentlichen ebene Seitenflächen. Die Zwischenräume können im Querschnitt beispielsweise ungefähr V-förmig sein oder noch eine Grundfläche haben und ungefähr U-förmig sein. Die Zwischenräume können im Querschnitt ferner im wesentlichen vollständig gebogen sein und beispielsweise einen Kreisbogen bilden, der höchstens gleich einem Halbkreis und beispielsweise kleiner als ein Halbkreis ist. Der bzw. jeder in einen Zwischenraum eingreifende Vorsprung des Sekundärteils bzw. Implantats hat ein gewisses Spiel, damit der Vorsprung trotz möglicher Fabrikationsungenauigkeiten und trotz durch Temperaturänderungen verursachten Abmessungsänderungen leicht in den Zwischenraum hineingeschoben werden kann. Das tangential zum erwähnten Teilkreis gemessene Spiel eines Vorsprungs wird vorzugsweise so klein bemessen, dass der Sekundär- und/oder Aufbauteil höchstens um einen Winkel hin und her gedreht werden kann, der vorzugsweise höchstens 2°, besser 1° oder sogar nur höchstens 0,5° beträgt.

Das Sackloch des Implantats hat vorzugsweise ein zum lösbaren Befestigen des Sekundärteils dienendes Innengewinde. Wenn der Sekundärteil einen Positionierungsabschnitt mit einem Vorsprung oder vorzugsweise mehreren Vorsprüngen hat, kann der Sekundärteil mit einem separaten, ein in das Innengewinde des Implantats einschraubbares Aussengewinde aufweisendes Befestigungselement lösbar am Implantat befestigt werden. Das Befestigungselement kann beispielsweise aus einer Schraube mit einem am einer Fläche des Sekundärteils angreifenden Kopf oder aus einem in den Sekundärteil einschraubbaren Bolzen bestehen. Der Bolzen kann dann zusätzlich zu den mit dem Innengewinde des Implantats verschraubbaren Aussengewinde noch ein mit einem Innengewinde des Sekundärteils verschraubbares, Aussengewinde besitzen, wobei beispielsweise eines der Aussengewinde rechtsgängig und das andere linksgängig ist und/oder wobei die beiden Aussengewinde verschiedene Steigungen haben. Für die Befestigung eines eine Positionierung ergebenden Sekundärteils ist also nur ein einziges zusätzliches Element, nämlich das genannte Befestigungselement erforderlich. Wenn der Sekundärteil hingegen keinen zum Eingreifen in eine Positionierungsnut des Implantats bestimmten Vorsprung hat, kann der Sekundärteil entweder ebenfalls mit einem separaten Befestigungselement der beschriebenen Art lösbar am Implantat befestigt werden oder einen Abschnitt aufweisen, der mit einem in das Innengewinde des Implantats einschraubbaren Aussengewinde versehen ist und zusammen mit den restlichen Abschnitten des Sekundärteils aus einem einstückigen Körper besteht. Eventuell kann man auch einen Sekundärteil vorsehen, der nicht durch eine Schraubverbindung am Implantat befestigt, sondern bei seiner Verwendung zuerst nur lösbar in das Loch des Implantats gesteckt und dann, wenn er nicht mehr herausgenommen werden muss, im Loch des Implantats einzementiert oder eingeklebt wird. Das Loch des Implantats kann dann trotzdem ein Innengewinde aufweisen, damit der gleiche Implantat-Typ auch zum Festschrauben eines Sekundärteils verwendbar ist. Eventuell kann man dann jedoch das Innengewinde des Implantats weglassen. Der Sekundärteil kann durch die beschriebenen Schraub- oder Zementier- oder Klebverbindungen sicher und mikrobewegungsfrei mit dem Implantat verbunden werden, so dass er sich unter physiologischen Bedingungen nicht infolge von Mikrobewegungen löst.

Eine erfindungsgemässe Implantate herstellende Firma kann beispielsweise auch verschiedene Varianten von zu den Implantaten passenden Sekundärteilen herstellen und Sätze mit einer Art von Implantaten und verschiedenartigen Sekundärteilen an Zahnärzte und Zahnkliniken und dergleichen liefern. Dort kann dann zum Beispiel eine zur Bildung eines Zahnersatzes dienende Suprakonstruktion unlösbar auf den Sekundärteil aufgebaut oder lösbar an diesen befestigt werden. Ferner können zwei oder mehr Vorrichtungen mit je einem Implantat sowie einem Sekundärteil zum Befestigen einer Brücke oder einer mehrere Zähne aufweisenden Zahnprothese dienen.

Wie schon erwähnt kann eventuell statt eines Sekundärteils ein spezieller Aufbauteil an einem Implantat befestigt werden. Ein derartiger, spezieller Aufbauteil kann dann beispielsweise statt von der die Implantate herstellenden Firma von einem Zahntechniker individuell für besondere Zwecke und/oder für einen bestimmten Patienten hergestellt werden. Das vorgängig zur Verbindung eines Sekundärteils mit dem Implantat geschriebene gilt dann im wesentlichen analog für die Verbindung eines speziellen Aufbauteils mit einem Implantat.

### Kurze Beschreibung der Zeichnungen

Der Erfindungsgegenstand wird anschliessend anhand von in den Zeichnungen dargestellten Ausführungsbeispielen erläutert. In den Zeichnungen zeigen
Fig. 1 einen Axialschnitt durch einen Teil eines Implantats, dessen Loch einen in der Nähe des unteren Endes eines zylindrischen Abschnitts angeordneten Positionierungsabschnitt hat,
Fig. 2 einen Querschnitt durch das Implantat gemäss Fig. 1 in grösserem Massstab,
Fig. 3 eine Schrägansicht des Implantats gemäss den Figuren 1 sowie 2,
Fig. 4 eine Schrägansicht eines Implantats mit einem gemäss Fig. 1 angeordneten, aber anders ausgebildeten Positionierungsabschnitt,
Fig. 5 eine Schrägansicht eines Implantats mit einem annähernd bei dessen oberem Ende angeordneten Positionierungsabschnitt,
Fig. 6 eine Schrägansicht durch ein Implantat, dessen Positionierungsabschnitt unter dem engeren Ende eines konischen Abschnitts des Lochs angeordnet ist,
Fig. 7 einen Axialschnitt durch einen geraden Sekundärteil mit einem in der Nähe des unteren Endes angeordneten Positionierungsabschnitt,
Fig. 8 einen Querschnitt entlang der Linie VIII - VIII der Fig. 7 durch den in dieser gezeichnete, für die Multipositionierung ausgebildeten Sekundärteil in grösserem Massstab,
Fig. 9 einen zur Fig. 8 analogen Querschnitt durch einen Sekundärteil für die Einzelpositionierung,
Fig. 10 einen Axialschnitt durch einen abgewinkelten Sekundärteil,
Fig. 11 einen Axialschnitt durch einen zum Implantat gemäss der Figur 5 passenden Sekundärteil,
Fig. 12 einen Axialschnitt durch einen geraden Sekundärteil mit einem Innengewinde zum Befestigen eines Bolzens,
Fig. 13 einen Axialschnitt durch einen Sekundärteil, dessen Innen- bzw. Verbindungsabschnitt einen konischen Aussenflächenabschnitt hat,
Fig. 14 eine Schrägansicht eines abgewinkelten Sekundärteils mit einem Innengewinde zum Befestigen eines Bolzens,
Fig. 15 eine Ansicht einer Schraube,
Fig. 16 eine Ansicht eines Bolzens mit zwei Gewinden,
Fig. 17 eine Ansicht eines anderen Bolzens,
Fig. 18 eine Schrägansicht eines Sekundärteils gemäss den Figuren 7, 8 und einer in diesem eingesetzten Schraube,
Fig. 19 einen Axialschnitt durch eine Vorrichtung mit einem Implantat gemäss den Figuren 1 bis 3 und den Teilen gemäss Fig. 18,
Fig. 20 einen Querschnitt entlang der Linie XX - XX der Fig. 19 durch die in dieser ersichtliche Vorrichtung,
Fig. 21 eine Schrägansicht eines geraden Sekundärteils gemäss Fig. 9 und einer in diesen eingesetzten Schraube,
Fig. 22 einen Querschnitt durch eine Vorrichtung mit einem Implantat gemäss der Figuren 1 bis 3 und den Teilen gemäss Fig. 21,
Fig. 23 eine Schrägansicht einer Vorrichtung mit einem Implantat gemäss Fig. 4, einem für die Einzelpositionierung ausgebildeten Sekundärteil und einem Bolzen,
Fig. 24 eine Schrägansicht eines abgewinkelten Sekundärteils für die Multipositionierung und einer Schraube,
Fig. 25 einen Axialschnitt durch eine Vorrichtung mit einem Implantat gemäss Fig. 4 und den Teilen gemäss Fig. 24,
Fig. 26 einen Querschnitt entlang der Linie XXVI - XXVI der Fig. 24 durch die in dieser gezeichnete Vorrichtung,
Fig. 27 einen Axialschnitt durch eine Vorrichtung mit einem Implantat gemäss Fig. 6 und einem abgewinkelten Sekundärteil gemäss Fig. 13,
Fig. 28 eine Schrägansicht einer Vorrichtung mit einem Implantat gemäss Fig. 6 und einem geraden Sekundärteil,
Fig. 29 eine Schrägansicht einer Vorrichtung mit einem Implantat gemäss den Fig. 1 bis 3 und einem geraden Sekundärteil ohne Positionierungsabschnitt und
Fig. 30, einen Querschnitt durch die Vorrichtung gemäss Fig. 29.

### Beschreibung der bevorzugten Ausführungsbeispiele

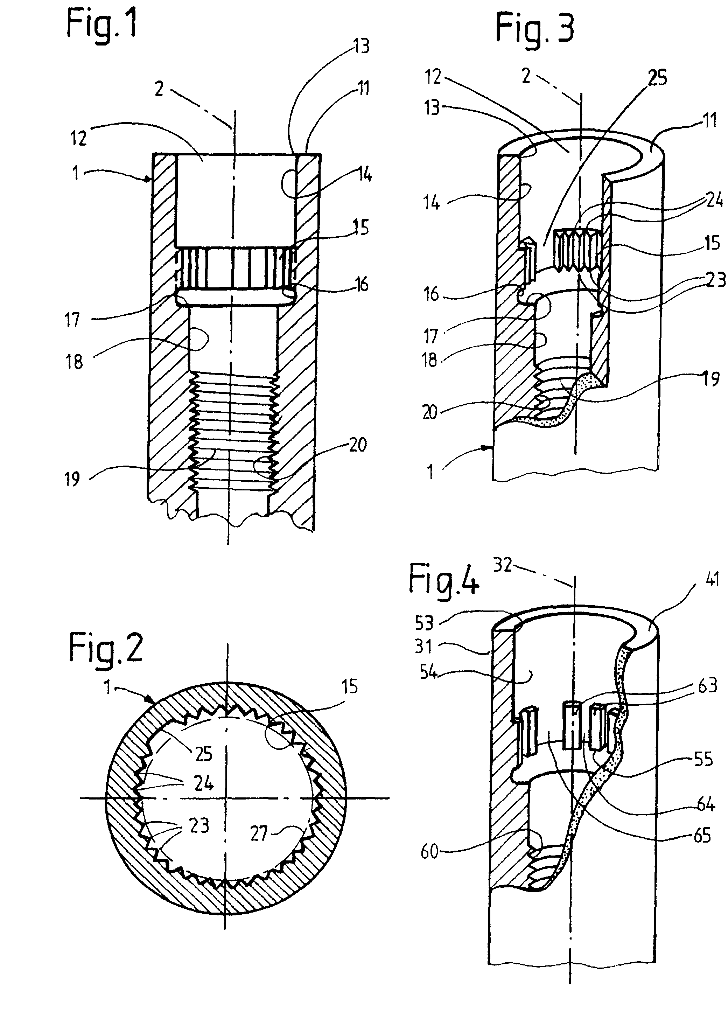

Das in den Figuren 1 bis 3 dargestellte Dentalimplantat 1 ist länglich sowie im allgemeinen rotationssymmetrisch zu einer Achse 2 und hat oben eine zylindrische, glatte Mantelfläche 10. Der in den Figuren 1 und 3 nicht sichtbare, untere Teil des Implantats 1 kann beispielsweise in irgendeiner bekannten oder neuen Weise ausgebildet sein und beispielsweise ebenfalls eine glatte zylindrische Mantelfläche oder ein Gewinde aufweisen. Ferner kann der nicht sichtbare untere Teil des Implantats 1 beispielsweise einen gegen unten offenen Hohlraum oder am unteren Ende einen vollen Querschnitt aufweisen.

Das Implantat 1 hat am oberen Ende eine Implantatschulter 11, die durch eine zur Achse 2 radiale, ebene Ringfläche gebildet ist. Das Implantat ist mit einem im allgemeinen zur Achse 2 koaxialen, abgestuften Sackloch 12 versehen. Dieses hat eine sich am oberen Ende des Implantats befindende, vom inneren Rand der die Schulter 11 bildenden Ringfläche umschlossene Mündung 13 und von dieser weg nach unten der Reihe nach einen zylindrischen Hauptabschnitt 14, einen Positionierungsabschnitt 15, einen kurzen, im allgemeinen zylindrischen Einstich 16, eine radiale und/oder geneigte Schulter 17, einen engeren zylindrischen Abschnitt 18 und einen Abschnitt 19 mit einem Innengewinde 20. Die axiale Abmessung des Positionierungsabschnitts 15 beträgt zum Beispiel ungefähr 0,5 mm bis 1 mm. Der Durchmesser des Einstichs 16 ist gleich demjenigen des zylindrischen Hauptabschnitts 14. Der Durchmesser des engeren, zylindrischen Abschnitts 18 ist mindestens oder ungefähr gleich dem maximalen Durchmesser des Innengewindes 20. Im übrigen sei angemerkt, dass der engere, zylindrische Abschnitt 18 eventuell wegfallen und das Innengewinde unmittelbar an den Einstich 16 anschliessen könnte.

Wie man besonders deutlich in den Figuren 2 und 3 sieht, weist der Positionierungsabschnitt 15 entlang dem Umfang abwechselnd aufeinanderfolgende Positionierungsvorsprünge 23 und Positionierungszwischenräume 24, 25 auf. Die Positionierungsvorsprünge 23 sind alle gleich ausgebildet, ragen von der durch den zylindrischen Hauptabschnitt 14 definierten Zylinderfläche weg nach innen gegen die Achse 2, verjüngen sich im Querschnitt nach innen gegen ihre Scheitel hin und sind im Querschnitt ungefähr V- bzw. dreieckförmig. Die Positionierungszwischenräume weisen mehrere gleich ausgebildete sowie gleich bemessene, insbesondere gleich breite, nämlich schmale, erste Positionierungszwischenräume 24 und einen einzigen breiteren, zweiten Positionierungszwischenraum 25 auf. Jeder erste Positionierungszwischenraum 23 besteht aus einer im Querschnitt ungefähr V-förmigen Nut oder Kerbe und hat zwei im wesentlichen ebene Seitenflächen, die von seinem Grund weg nach innen zur Achse 2 hin voneinander weg geneigt sind. Der breitere, zweite Positionierungszwischenraum 25 hat eine ebene oder leicht gebogene Grundfläche und zwei von dieser weg nach innen voneinander weg geneigte Seitenflächen. Die Seitenflächen der Zwischenräume und die Scheitel der Vorsprünge sind in Axialschnitten gerade und verlaufen parallel zur Achse 2. Die Scheitel der Vorsprünge 23 definieren einen Teilkreis 27 und liegen auf einer Zylinderfläche. Die Gründe der Zwischenräume 24, 25 definieren zusammen ebenfalls eine Zylinderfläche, die ungefähr oder genau mit den zylindrischen Flächen des Hauptabschnitts 14 sowie des Einstichs 16 zusammenfällt. Die schmalen, ersten, einander benachbarten Positionierungszwischenräume 24 haben alle gleiche Abstände voneinander und definieren auf dem Teilkreis 27 eine Teilung, beispielsweise eine 10°- bzw. 36er-Teilung. Der breitere, zweite Positionierungszwischenraum 25 ist durch Weglassen von einem Vorsprung 23 oder von zwei oder noch mehr einander benachbarten Vorsprüngen 23 gebildet.

Das in Fig. 4 ersichtliche Dentalimplantat 31 ist weitgehend ähnlich wie das Implantat 1 ausgebildet, definiert eine Achse 32 und besitzt eine Implantatschulter 41, ein Sackloch 52 mit einer Mündung 53, einem zylindrischen Hauptabschnitt 54, einen Positionierungsabschnitt 55 und einem Innengewinde 60. Der Positionierungsabschnitt 55 ist analog angeordnet wie der Positionierungsabschnitt 15 und besitzt entlang seinem Umfang abwechselnd aufeinander folgende Positionierungsvorsprünge 63 und Positionierungszwischenräume 64, 65. Die Positionierungsvorsprünge 63 sind wiederum alle gleich ausgebildet. Die Positionierungszwischenräume 64, 65 weisen mehrere erste, schmale Positionierungszwischenräume 64 und einen zweiten, breiteren Positionierungszwischenraum 65 auf. Jeder Positionierungsvorsprung 63 besteht aus einem Nocken und hat eine im Querschnitt kreisbogenförmige Scheitelfläche. Die Scheitelflächen der Vorsprünge bilden Teile einer zur Achse des Implantats 31 koaxialen Zylinderfläche und definieren einen Teilkreis. Der zweite, breitere Positionierungszwischenraum 65 ist durch Weglassen eines Positionierungsvorsprungs 63 gebildet. Jeder Positionierungszwischenraum 64, 65 ist im Querschnitt ungefähr U-förmig und/oder viereckförmig und hat zwei Seitenflächen, die eben und ungefähr oder genau parallel zu einer durch die Achse 32 und die Mitte des betreffenden Positionierungszwischenraums verlaufenden Ebene sind. Ferner hat jeder Zwischenraum 64, 65 eine Grundfläche, die parallel zur Achse 32 sowie im Querschnitt kreisbogenförmige oder gerade ist und ungefähr mit der Fläche des zylindrischen Hauptabschnitts 54 zusammenfällt. Die ersten, schmalen Positionierungszwischenräume 64 definieren zusammen eine Teilung, zum Beispiel eine 30°- bzw. 12er-Teilung.

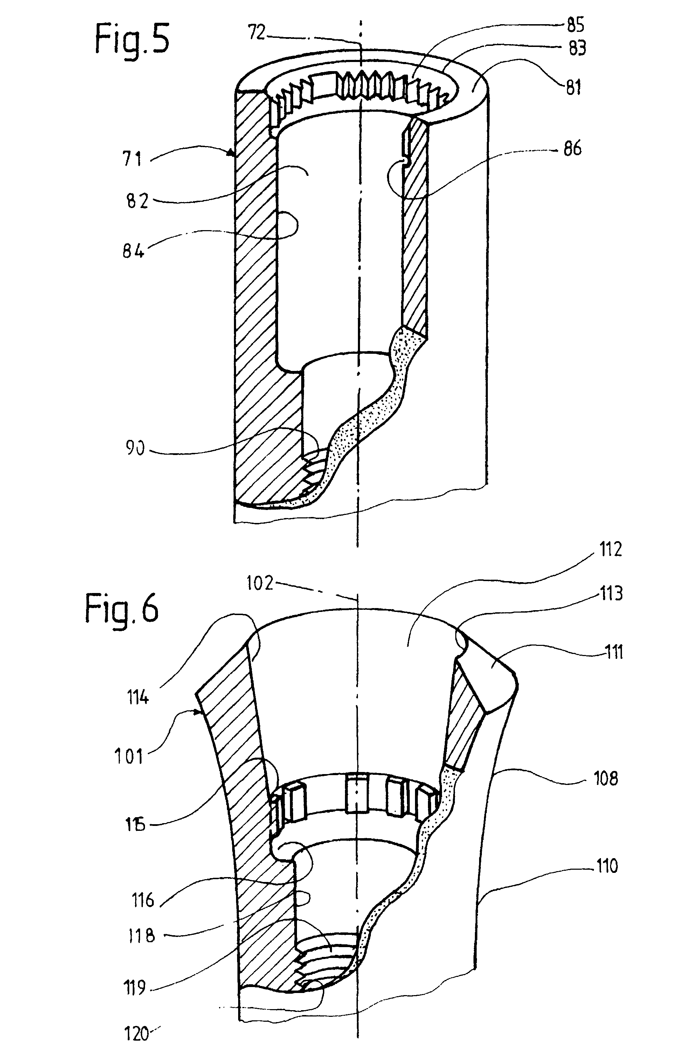

Das in Fig. 5 ersichtliche Dentalimplantat 71 hat eine Achse 72, eine Implantatschulter 81 und ein Sackloch 82 mit einer sich am oberen Ende des Implantats befindenden, von der Implantatschulter 81 umschlossenen Mündung 83, einen zylindrischen Hauptabschnitt 84, einen Positionierungsabschnitt 85 und einem Innengewinde 90. Der Positionierungsabschnitt befindet sich annähernd beim oberen Ende des Implantats zwischen der Mündung 83 und dem zylindrischen Hauptabschnitt 84 und ist durch einen Einstich 86 vom letzteren getrennt. Der Positionierungsabschnitt 85 hat beispielsweise ähnlich ausgebildete Vorsprünge und Zwischenräume wie der Positionierungsabschnitt 15 des Implantats 1, könnte jedoch auch analog zum Positionierungsabschnitt 55 des Implantats 31 ausgebildet sein. Die Scheitel der Vorsprünge des Positionierungsabschnitts definieren eine Zylinderfläche deren Durchmesser beispielsweise ungefähr oder mindestens gleich demjenigen des zylindrischen Hauptabschnitts 84 ist.

Das in Fig. 6 dargestellte Dentalimplantat 101 hat eine Achse 102. Die Mantelfläche des Implantats 101 hat zuoberst einen sich nach oben trompetenförmig oder konisch erweiternden Abschnitt 108. An dessen unteres Ende schliesst ein zylinderischer Abschnitt 110 an. Die Implantatschulter 111 ist durch eine konische, sich nach oben verjüngende Ringfläche gebildet. Das Sackloch 112 hat eine von der Implantatschulter 111 umschlossene Mündung 113 und von dieser weg nach unten der Reihe nach einen sich nach unten verjüngenden, konischen Hauptabschnitt 114, einen Positionierungsabschnitt 115, einen Einstich 116, einen zylindrischen Abschnitt 118 und einen Abschnitt 119 mit einem Innengewinde 120. Der Positionierungsabschnitt 115 ist beispielsweise ähnlich wie der Positionierungsabschnitt 55 des Implantats 31 ausgebildet, könnte jedoch auch analog zum Positionierungsabschnitt 15 des Implantats 1 ausgebildet sein. Es sei angemerkt, dass die Scheitel der Positionierungsvorsprünge des Positionierungsabschnitts 115 eine Zylinderfläche definieren, jedoch eventuell statt dessen eine konische Fläche aufspannen könnten.

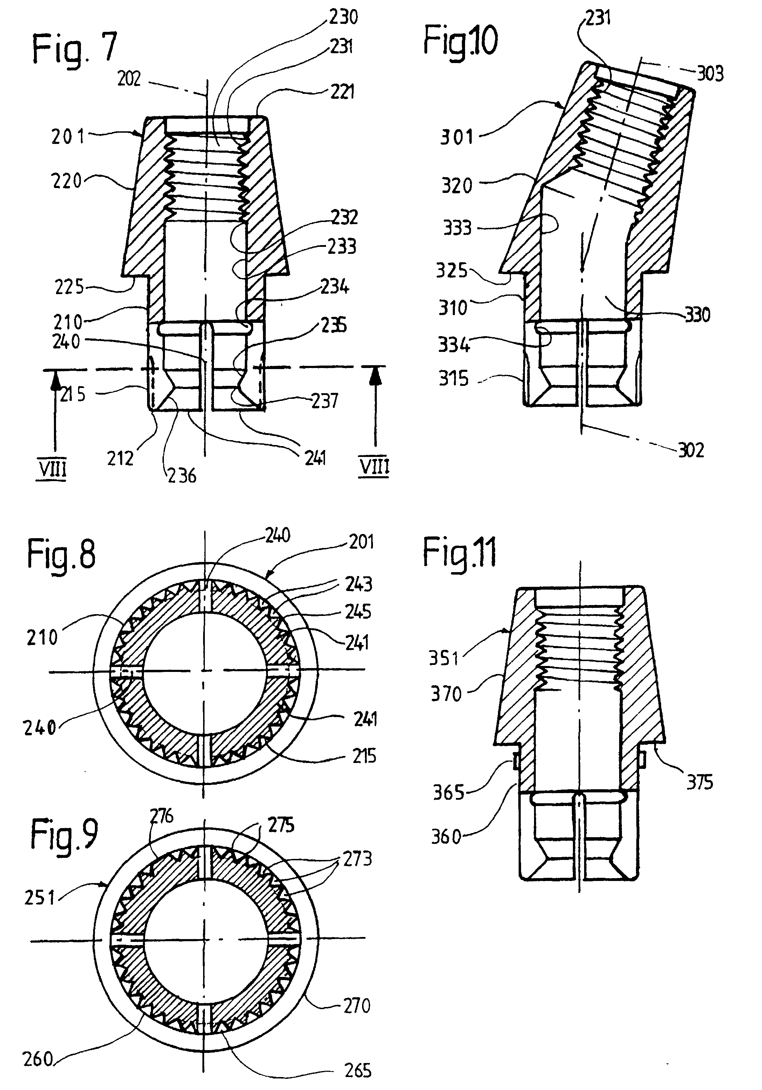

Der in Figuren 7 und 8 dargestellte Sekundärteil 201 ist im allgemeinen rotationssymmetrisch zu einer Achse 202 sowie gerade und besitzt unten einen im allgemeinen zylindrischen, zum Einsetzen in ein Implantat und zum lösbaren Verbinden mit diesem bestimmten Innen- bzw. Verbindungsabschnitt 210. Dieser ist in der Nähe des unteren Endes 212 des Sekundärteils mit einem Positionierungsabschnitt 215 versehen. Der Sekundärteil besitzt ferner einen sich vom Innen- bzw. Verbindungsabschnitt 210 weg nach oben konisch verjüngenden, zum Anordnen ausserhalb des Implantats bestimmten Aussen- bzw. Kopfabschnitt 220, der das obere Ende 221 des Sekundärteils bildet. Der Kopfabschnitt 220 ragt radial über den Verbindungsabschnitt 210 hinaus und bildet bei der Verbindung dieser beiden Abschnitte eine Schulter 225 mit einer ringförmigen, radialen, ebenen Auflagefläche. Der Sekundärteil 201 ist mit einem durchgehenden, axialen Loch 230 versehen. Dieses ist in der Nähe des oberen Sekundärteil-Endes 221 mit einem Innengewinde 231 versehen und besitzt von diesem weg abwärts der Reihe nach eine Schulter 232, einen zylindrischen Sitz 233 mit einer ein wenig unterhalb der Schulter 225 angeordneten Ringnut 234, einen sich nach unten verjüngenden, konischen Abschnitt 235 und einen sich nach unten erweiternden, konischen Abschnitt 236, der sich bis zum unteren Ende 212 des Sekundärteils erstreckt. Die beiden konischen Abschnitte 235, 236 bilden zusammen eine Einschnürung 237. Ein Teil des Innen- bzw. Verbindungsabschnitts 210 ist vom unteren Ende 212 her durch axiale Einschitte 240 in axiale, elastische, federnde, entgegen einer Rückstellkraft voneinander und von der Achse 202 weg spreizbare Zungen 241 unterteilt. Es sind beispielsweise vier Einschnitte und Zungen vorhanden, wobei jedoch die Anzahl und Tiefe der Einschnitte 240 variiert werden können. Die Einschnitte 240 reichen vom unteren Ende 212 über die Einschnürung hinaus bis ungefähr zu der zur Verbesserung der Spreizbarkeit der Zungen dienenden Ringnut 234, sollen sich jedoch nicht bis zur Schulter 225 erstrecken.

Der Positionierungsabschnitt 215 befindet sich im Bereich der Zungen 241 und weist in deren Aussenfläche vorhandene, axiale Nuten auf, die Positionierungszwischenräume 243 bilden, zwischen denen Positionierungsvorsprünge 245 vorhanden sind. Die Scheitel der letzteren liegen in der zylindrischen Aussenfläche des Innen- bzw. Verbindungsabschnitts 210. Die Zwischenräume 243 und Vorsprünge 245 sind - abgesehen von den Lücken bei den Einschnitten 240 - gleichmässig entlang dem Umfang des Sekundärteils verteilt. Die Positionierungszwischenräume 243 sind alle gleich ausgebildet sowie bemessen, haben die gleiche Teilung wie die Positionierungsvorsprünge 23 des Implantats 1 und sind mindestens annähernd komplementär zu den letzteren. Die Positionierungsvorsprünge 245 des Sekundärteils 201 sind ebenfalls alle gleich ausgebildet sowie bemessen, haben die gleiche Teilung wie die ersten Positionierungszwischenräume 24 des Implantats 1 und sind mindestens annähernd komplementär zu den letzteren. Der Positionierungsabschnitt 215 des Sekundärteils 201 ermöglicht - wie noch näher erläutert wird - eine Multipositionierung des Sekundärteils 201 bezüglich des Implantats 1.

Der in Fig. 9 ersichtliche Sekundärteil 251 besitzt einen Innen- bzw. Verbindungsabschnitt 260 mit einem für die Einzelpositionierung ausgebildeten Positionierungsabschnitt 265 und einen Aussen- bzw. Kopfabschnitt 270. Der Positionierungsabschnitt 265 weist durch axiale Nuten gebildete Positionierungszwischenräume 273, mehrere erste, schmale, identisch ausgebildete Positionierungsvorsprünge 275 und einen zweiten, breiteren Positionierungsvorsprung 276 auf. Die Positionierungszwischenräume 273 und die ersten Positionierungsvorsprünge 275 haben die gleiche Teilung wie die ersten Positionierungszwischenräume 24 des Implantats 1. Der zweite, breitere Positionierungsvorsprung 276 kann gedanklich durch Weglassen bzw. Überbrücken mindestens eines Zwischenraums aus zwei oder eventuell mehr einander benachbarten, ersten Positionierungsvorsprüngen gebildet werden. Die Positionierungszwischenräume 273 des Sekundärteils 251 sind ungefähr komplementär zu den Positionierungsvorsprüngen 23 des Implantats 1. Ferner sind die ersten Positionierungsvorsprünge 275 und der zweite Positionierungsvorsprung 276 des Sekundärteils 251 ungefähr komplementär zu den ersten Positionierungszwischenräumen 24 bzw. zum zweiten Positionierungszwischenraum 25 des Implantats 1.

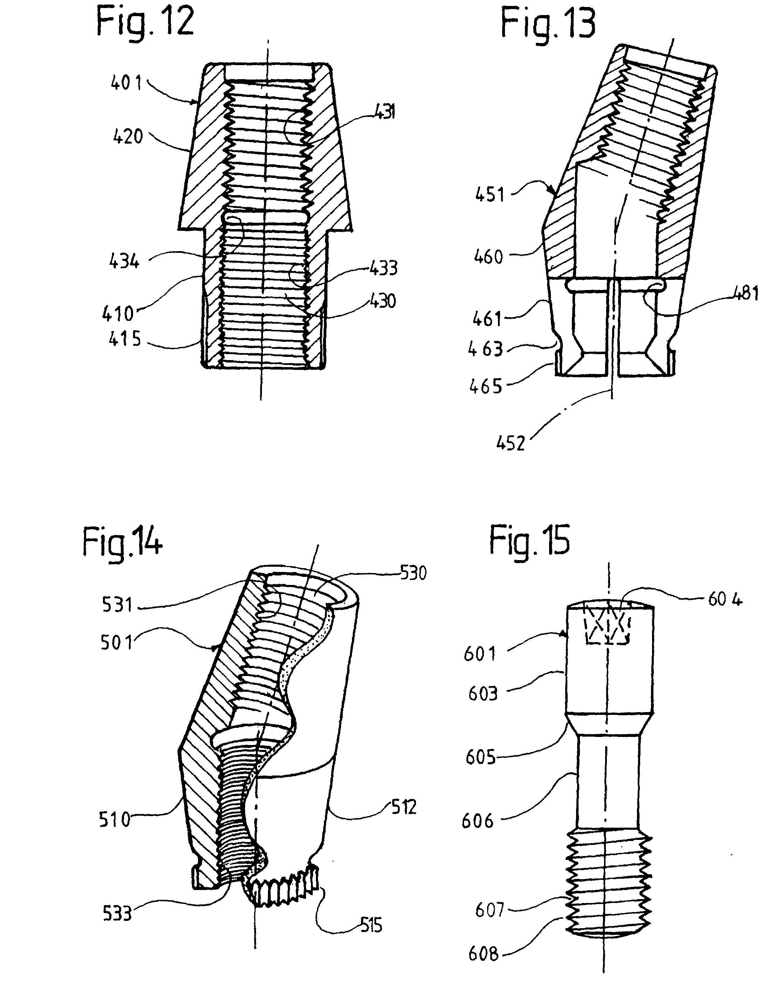

Der in Fig. 10 ersichtliche, abgewinkelte Sekundärteil 301 hat zwei miteinander einen stumpfen Winkel bildende Achsen 302, 303, einen im allgemeinen zur Achse 302 rotationssymmetrischen Innen- bzw. Verbindungsabschnitt 310 mit einem Positionierungsabschnitt 315 und einen konischen, im allgemeinen zur Achse 303 rotationssymmetrischen Aussen- bzw. Kopfabschnitt 320. Die zwischen diesem und dem Verbindungsabschnitt 310 vorhandene Schulter 325 ist radial sowie rechtwinklig zur Achse 302. Der Sekundärteil 301 hat ein durchgehendes, abgewinkeltes Loch 330, das einen sich durch den Verbindungsabschnitt 310 und den unteren Teil des Kopfabschnitts 320 erstreckenden zur Achse 302 koaxialen Teil mit einem zylindrischen Sitz 333 sowie einer Ringnut 334 und oberhalb dem Sitz 333 einen zur Achse 303 koaxialen Teil mit einem Innengewinde 331 besitzt.

Der in Fig. 11 dargestellte, gerade Sekundärteil 351 hat einen Innen- bzw. Verbindungsabschnitt 360 mit einem Positionierungsabschnitt 365, einen Aussen- bzw. Kopfabschnitt 370 und beim Übergang der beiden Abschnitte 360, 370 eine Schulter 375. Der Positionierungsabschnitt 365 befindet sich in der Nähe des oberen Endes des Verbindungsabschnitts 360 sowie der Schulter 375.

Der in Fig. 12 gezeichnete, gerade Sekundärteil 401 hat einen Innen- bzw. Verbindungsabschnitt 410 mit einem Positionierungsabschnitt 415, einen Aussen- bzw. Kopfabschnitt 420 und ein durchgehendes axiales Loch 430. Dieses hat ein oberes, sich im Bereich des Kopfabschnitts 420 befindendes, zum Befestigen einer Okklusalschraube dienendes Innengewinde 431, unterhalb von diesem ein unteres, sich im wesentlichen im Verbindungsabschnitt 410 befindendes Innengewinde 433 und eine sich zwischen den beiden Gewinden befindende Ringnut 434. Der Verbindungsabschnitt ist bei dieser Variante frei von Einschnitten und hat also in Querschnitten über seine ganze Länge die Form eines kompakten, unterbruchslosen Rings.

Der Sekundärteil 451 in Fig. 13 ist abgewinkelt und hat einen im wesentlichen zu einer Achse 452 rotationssymmetrischen Innen- bzw. Verbindungsabschnitt 460. Dieser hat von oben nach unten einen sich nach unten verjüngenden konischen Abschnitt 461, eine Ringnut 463 und einen Positionierungsabschnitt 465 mit einer zylindrischen Hüllfläche. Der Innen- bzw. Verbindungsabschnitt 460 ist derart ausgebildet, dass sein konischer Abschnitt 461 in den konischen Hauptabschnitt 114 und sein Positionierungsabschnitt 465 in den Positionierungsabschnitt 115 im Loch 112 des in Fig. 6 ersichtlichen Implantats 101 hinein passt.

Der in Fig. 14 ersichtliche, abgewinkelte Sekundärteil 501 hat einen Innen- bzw. Verbindungsabschnitt 510, der analog wie derjenige des vorher beschriebenen Sekundärteils 451 einen konischen Abschnitt 512 und einen Positionierungsabschnitt 515 besitzt. Das Loch 530 des Sekundärteils 501 ist analog wie beim Sekundärteil 401 mit einem oberen Innengewinde 531 und einem unteren Innengewinde 533 versehen.

Die Positionierungsabschnitte 315, 415 der in den Figuren 10 bzw. 12 gezeichneten Sekundärteile 301 bzw. 401 können für die Multi- oder Einzelpositionierung und derart ausgebildet sein, dass sie zu den Implantaten 1 oder 31 passen. Der Positionierungsabschnitt 365 des Sekundärteils 351 in Fig. 11 kann ebenfalls für die Multi- oder Einzelpositionierung ausgebildet sein und passt zu denjenigen des Implantats 71 in Fig. 5. Der Positionierungsabschnitt 465 des in Fig. 13 gezeichneten Sekundärteils 451 kann wiederum für die Multioder Einzelpositionierung ausgebildet sein und passt zu dem in Fig. 6 gezeichneten Implantat oder einem im allgemeinen ähnlichen Implantat, dessen Positionierungsabschnitt analog zu demjenigen des Implantats 1 profiliert ist. Der Positionierungsabschnitt 515 des in Fig. 14 gezeichneten Implantats 501 passt zu einem Implantat, dessen Loch wie dasjenige des Implantats 101 in den Figuren 7, 8 einen konischen Abschnitt, aber einen Positionierungsabschnitt hat, der analog wie derjenige des in den Figuren 1 bis 3 ersichtlichen Implantats 1 profiliert ist, könnte aber auch vollständig zum Implantat 101 passend sein.

Soweit vorgängig nichts anderes geschrieben wurde, können die Implantate, 31, 71, 101 gleich oder ähnlich wie das Implantat 1 ausgebildet sein. Ferner können die Sekundärteile 251, 301, 351, 401, 451, 501, soweit vorgängig nichts anderes geschrieben wurde gleich oder ähnlich wie der Sekundärteil 201 ausgebildet sein. Im übrigen besteht jedes Implantat und jeder Sekundärteil vorzugsweise aus einem einstückigen, metallischen Körper.

Die in der Fig. 15 dargestellte Schraube 601 dient als Befestigungselement, um einen der Sekundärteile 201, 251, 301, 351, 451 lösbar an einem der Implantate 1, 31, 71, 101 zu befestigen. Die Schraube 601 hat von oben nach unten der Reihe nach einen zylindrischen Kopf 603 mit einem Mehrkant-Sackloch 604, z.B. einem Sechskant-Sackloch, einen sich nach unten verjüngenden, konischen Abschnitt 605, einen zylindrischen Schaft 606 und einen Gewindeteil 607 mit einem Aussengewinde 608. Der zylindrische Kopf 603 und der konische Abschnitt 605 passen radial annähernd spielfrei in den zylindrischen Sitz 233 bzw. den konischen Abschnitt 235 des Lochs 230 des Sekundärteils 201 sowie die entsprechenden Lochabschnitte der Sekundärteile 251, 301, 351, 451 hinein. Der Gewindeteil 607 mit dem Aussengewinde 608 ist in das Innengewinde 20 des Implantats 1 oder eines der anderen Implantate einschraubbar. Der Durchmesser des Schafts 606 ist beispielsweise gleich dem Kerndurchmesser des Aussengewindes 608.

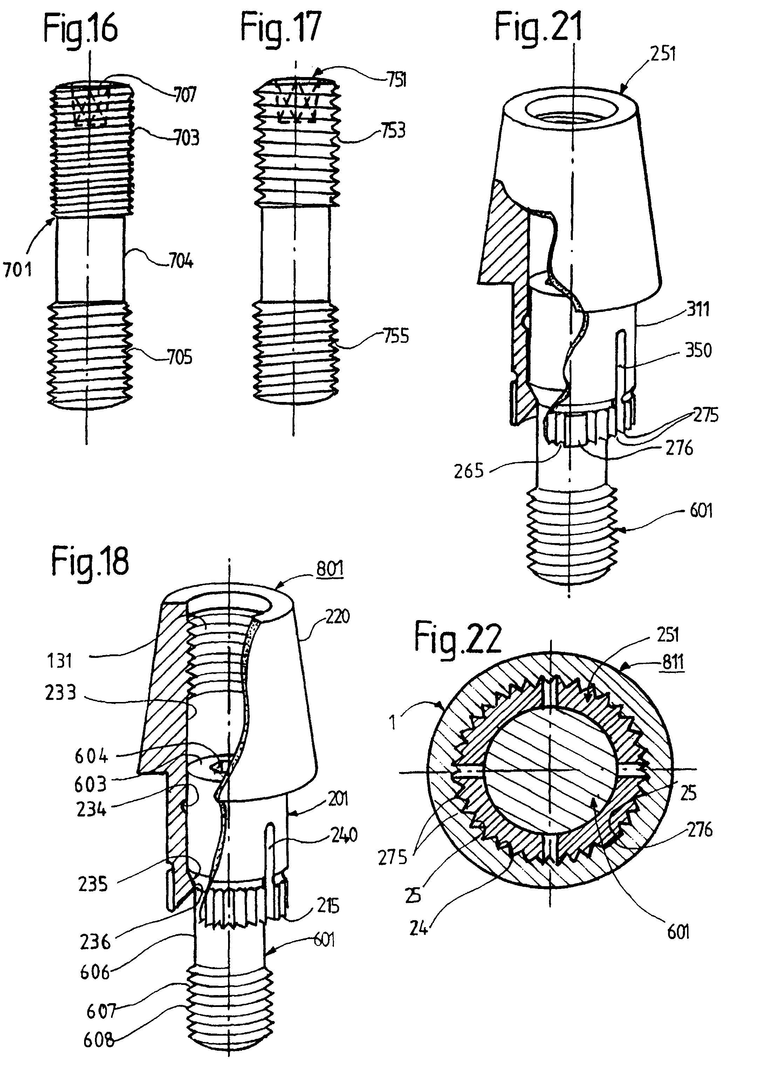

Der in Fig. 16 gezeichnete, einstückige Bolzen 701 dient als Befestigungselement zum lösbaren Befestigen des Sekundärteils 401 oder 501 an einem der Implantate 1, 31, 71, 101 und hat ein oberes Aussengewinde 703, einen gewindelosen, zylindrischen Mittelabschnitt 704 und ein unteres Aussengewinde 705. Der Bolzen 701 ist ferner am oberen Ende mit einem Mehrkant-Sackloch 707, beispielsweise einem Sechskantloch, versehen. Das untere Aussengewinde 705 ist in das Innengewinde 20 des Implantats 1 oder eines anderen Implantats einschraubbar und beispielsweise wie diese Implantat-Innengewinde als metrisches, rechtsgängiges Standardgewinde ausgebildet. Das obere Innengewinde 703 hat vorzugsweise eine kleinere Steigung als das untere Gewinde, ist in das untere Innengewinde 433 oder 533 des Sekundärteils 401 bzw. 501 einschraubbar und besteht beispielsweise wie die Innengewinde 433, 533 aus einem rechtsgängigen Feingewinde. Der Durchmesser des Mittelabschnitts 704 ist ungefähr oder höchstens gleich dem Kerndurchmesser der beiden Gewinde 703, 704.

Der in Fig. 17 ersichtliche Bolzen 751 ist ähnlich wie der Bolzen 701 ausgebildet und hat wie dieser ein oberes Aussengewinde 753 sowie ein unteres Aussengewinde 755. Das letztere ist rechtsgängig und in das Innengewinde von einem der Implantate einschraubbar, während das obere Gewinde 753 linksgängig ist und die gleiche Steigung wie das untere Gewinde 755 oder eventuell eine kleinere Steigung als dieses hat. Das obere Gewinde 753 kann dann in einem ähnlich wie die Sekundärteile 401, 501 ausgebildeten Sekundärteil eingeschraubt werden, der als unteres Innengewinde ein linksgängiges Gewinde besitzt.

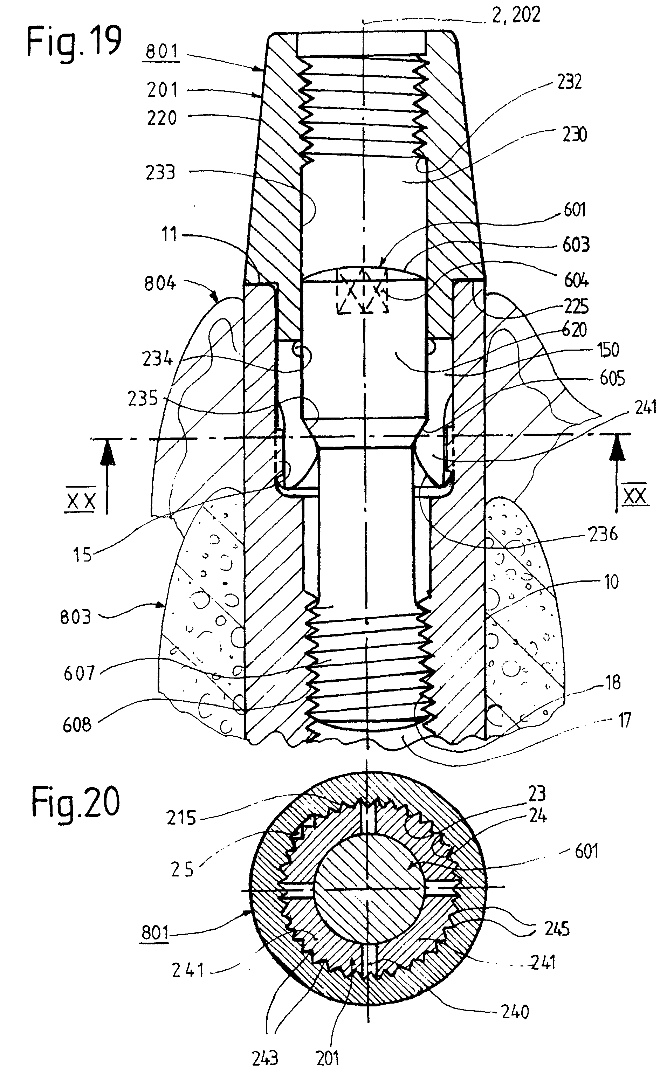

Nun wird anhand der Figuren 18, 19, 20 die Verwendung eines Dentalimplantats 1, eines Sekundärteils 201 und einer Schraube 601 zur Bildung einer in den Figuren 19, 20 als Ganzes mit 801 bezeichneten Vorrichtung zum Halten und/oder Bilden eines Zahnersatzes erläutert. In Fig. 19 sind auch noch ein Kieferknochen 803 des Unterkiefers eines Patienten und das den Kieferknochen bedeckende Weichgewebe 804, d.h. die Gingiva, angedeutet. Das Implantat 1 wird derart in einem Loch des Kieferknochens 803 verankert, dass die Implantatschulter 11 aus diesem herausragt.

Der Kopf 603 der Schraube 601 wird vorzugsweise bereits von der die verschiedenen Teile der Vorrichtung 801 herstellenden Firma vor dem Verbinden des Sekundärteils 201 mit dem Implantat 1 von unten her unter einer vorübergehenden Spreizung der Zungen 241 in das Loch 230 des Sekundärteils 201 eingeführt, so dass der Kopf 603 und der konische Abschnitt 605 in den zylindrischen Sitz 233 gelangen in welchem sie drehbar und zwischen der Schulter 232 und dem konischen Abschnitt 235 begrenzt axial verstellbar sind. Der Sekundärteil 201 hält dann die Schraube 601, wie es in Fig. 18 dargestellt ist. Die Schraube 601 und der Sekundärteil 201 werden nun gemeinsam in axialer Richtung in das Sackloch 12 des Implantats 1 eingeführt. Der zylindrische Hauptabschnitt 14 des Lochs 12 des Implantats zentriert dann den Verbindungsabschnitt 210 des Sekundärteils bezüglich der Achse 2. Wenn die Schraube beim Einführen in das Implantat den Anfang des Implantat-Innengewindes 20 erreicht, wird ihr Kopf vorübergehend im Loch 230 des Sekundärteils zurückgeschoben. Der Sekundärteil 201 kann nun derart um seine Achse 202 und die mit dieser zusammenfallenden Achse 2 des Implantats 1 gedreht werden, dass der Sekundärteil 201 in eine bezüglich des Implantats 1 gewünschte Position - d.h. Drehstellung - gelangt. Der Sekundärteil wird danach tiefer in das Implantat hineingeschoben, bis die Schulter 225 des Sekundärteils auf der Implantatschulter 11 aufliegt. Dabei gelangen die meisten Positionierungsvorsprünge 245 des Positionierungsabschnitts 215 des Sekundärteils 201 in einen der ersten Positionierungszwischenräume 24 des Positionierungsabschnitts 15 des Implantats. Ferner können - abhängig von der Breite des zweiten Positionierungszwischenraums 25 des Implantats - zwei oder mehr Positionierungsvorsprünge 245 des Sekundärteils in den zweiten Positionierungszwischenraum 25 hinein gelangen, wenn sich nicht gerade zufällig einer der Einschnitte 204 bei diesem befindet. Im übrigen greifen auch Positionierungsvorsprünge 23 des Implantats in Positionierungszwischenräume 243 des Sekundärteils ein. Die ineinander eingreifenden Positionierungsvorsprünge und -zwischenräume des Implantats und Sekundärteils sichern den letzteren gegen Drehungen und definieren dessen Position bzw. Drehstellung. Da alle Positionierungsvorsprünge 245 des Sekundärteils 201 gleich ausgebildet sind, ermöglicht dieser eine Multipositionierung und kann entsprechend der 10°- bzw. 36er-Teilung der ersten, schmalen Positionierungszwischenräume 24 des Implantats wahlweise in einer von 36 möglichen, genau definierten Drehstellungen positioniert werden. Nach der Positionierung des Sekundärteils kann die Schraube 601 mittels eines von oben her in das Loch 230 des Sekundärteils und das Mehrkant-Sackloch der Schraube eingeführten Werkzeugs in das Innengewinde des Implantats eingeschraubt werden, bis der konische Abschnitt 605 der Schraube (wieder) am konischen Abschnitt 235 des Sekundärteil-Lochs anliegt, den Sekundärteil nach unten zieht, die Zungen 241 auseinanderspreizt und den Sekundärteil dadurch zusätzlich mit dem Implantat verklemmt. Die konische Manteloder Aussenfläche des Aussen- bzw. Kopfabschnitts 220 des Sekundärteils 201 schliesst sich dann bei den äusseren Rändern der aufeinander aufliegenden Schultern 225 und 11 des Sekundärteils bzw. Implantats fugenlos an die zylindrische Mantelfläche 10 des Implantats an.

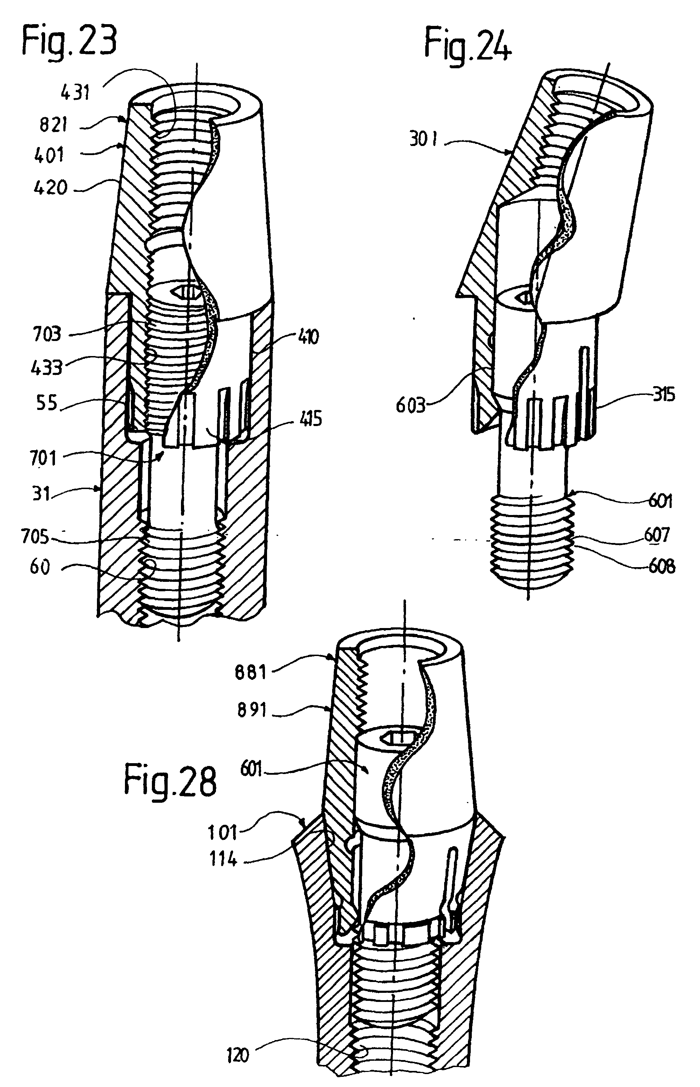

Die Figuren 21, 22 illustrieren die Bildung einer Vorrichtung 811 mit einem Implantat 1, einem geraden, gemäss Fig. 11 für die Einzelpositionierung ausgebildeten Sekundärteil 251 und einer Schraube 601. Der in Fig. 21 ersichtliche Sekundärteil 251 hält die Schraube 601 und kann zusammen mit dieser in das in Fig. 22 dargestellte Implantat 1 eingesteckt werden, das vorgängig in einem nicht gezeichneten Kieferknochen verankert wurde. Beim Verbinden des Sekundärteils 251 mit dem Implantat, kann der zweite, breitere Positionierungsvorsprung 276 des Positionierungsabschnitts 265 des Sekundärteils 251 in den zweiten, breiteren Positionierungszwischenraum 25 des Implantats eingreifen. Die ersten, schmalen Positionierungsvorsprünge 275 des Sekundärteils können dann in erste, schmale Positionierungszwischenräume 24 des Implantats 1 eingreifen. Der Sekundärteil 251 kann also nur in einer einzigen Position, d.h. Drehstellung am Implantat 1 befestigt werden.

Die in der Fig. 23 ersichtliche Vorrichtung 821 weist ein Implantat 31 und einen geraden Sekundärteil 401 auf, der einen zum Positionierungsabschnitt 55 des Implantats 31 passenden, für die Einzelpositionierung ausgebildeten Positionierungsabschnitt mit mehreren ersten, schmalen Positionierungsvorsprüngen und einem zweiten, breiteren Positionierungsvorsprung 415 besitzt. Zum Zusammenbauen der Vorrichtung 821 wird das Aussengewinde 703 des Bolzens 701 beispielsweise so weit in das untere Innengewinde 433 des Sekundärteils 401 eingeschraubt, bis der Bolzen 701 mindestens annähernd am unteren Ende des oberen Innengewindes 431 ansteht. Der Bolzen und der mit diesem verbundene Sekundärteil können dann zusammen in das in einem Kieferknochen befestigte Implantat eingeführt werden, so dass der Positionierungsabschnitt des Sekundärteils in Eingriff mit dem Positionierungsabschnitt 55 des Implantats gelangt und den Sekundärteil positioniert sowie unverdrehbar mit dem Implantat verbindet, während sich der Bolzen noch oberhalb des Innengewindes 60 des Implantats befindet. Danach kann man den Bolzen mit einem in sein Mehrkant-Sackloch eingreifenden Werkzeug drehen und das untere Aussengewinde 705 des Bolzens in das Innengewinde 60 des Implantats 31 einschrauben. Das vorher in den Sekundärteil eingeschraubte, obere Aussengewinde 703 des Bolzens wird dabei ebenfalls nach unten bewegt, verbleibt aber im Innengewinde 824 des Sekundärteils.

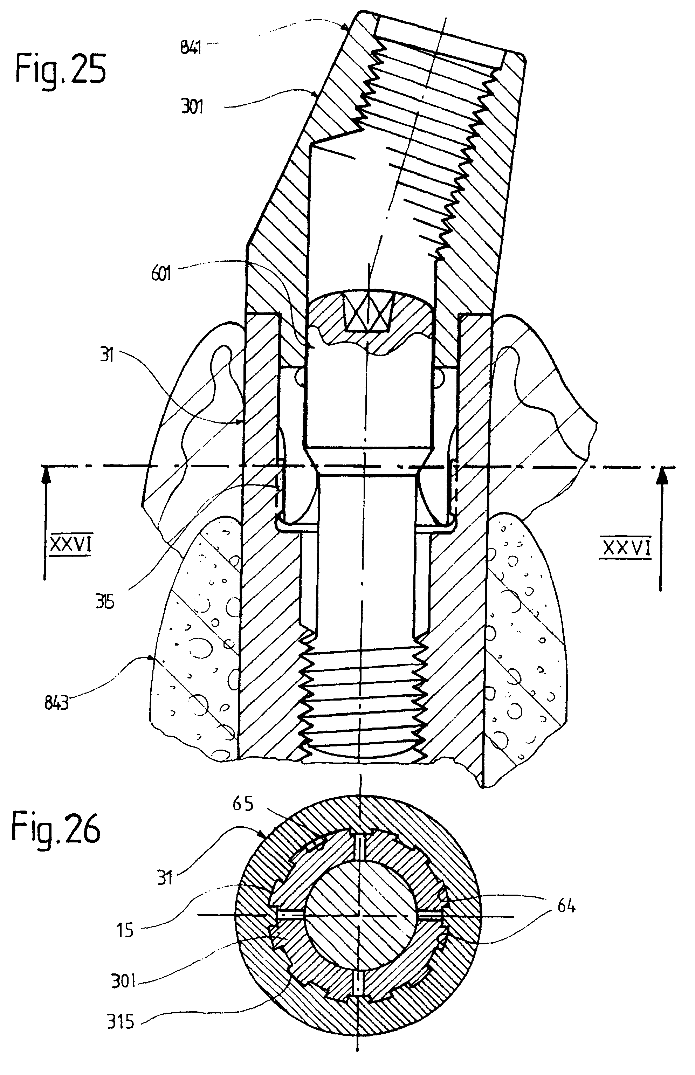

Die in den Figuren 24, 25, 26 dargestellte Vorrichtung 841 besitzt ein in einen Kieferknochen 843 eingesetztes Implantat 31, einen abgewinkelten Sekundärteil 301 und eine Schraube 601. Der Positionierungsabschnitt 315 des Sekundärteils ist zum Implantat 31 passend und für die Multipositionierung ausgebildet und hat dementsprechend nur Positionierungsvorsprünge, die alle gleich breit sind.

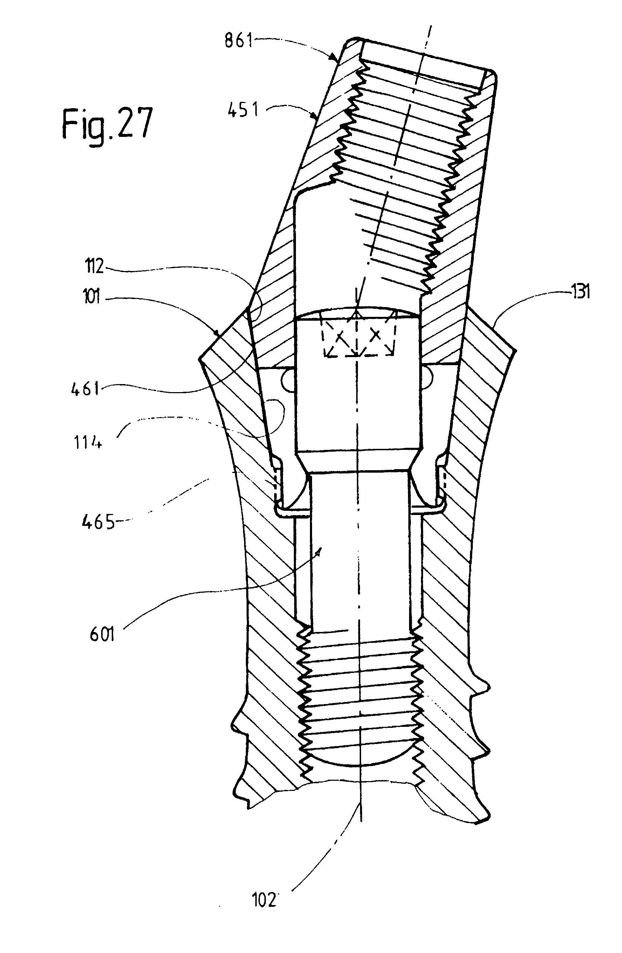

Die in Fig. 27 ersichtliche Vorrichtung 861 besitzt ein Implantat 101, einen abgewinkelten Sekundärteil 451 und eine Schraube 601. Der konische Abschnitt 461 des Sekundärteils 451 sitzt im konischen Hauptabschnitt 114 vom Sackloch 112 des Implantats 101. Der konische Hauptabschnitt 114 zentriert den Sekundärteil bezüglich der Achse 102 und bildet gleichzeitig eine Auflage, welche die axiale Stellung des Sekundärteils festlegt. Der Sekundärteil 451 ist durch Positionierungsabschnitt 465 in einer Drehstellung im Implantat positioniert und durch die Schraube 601 lösbar am Implantat befestigt.

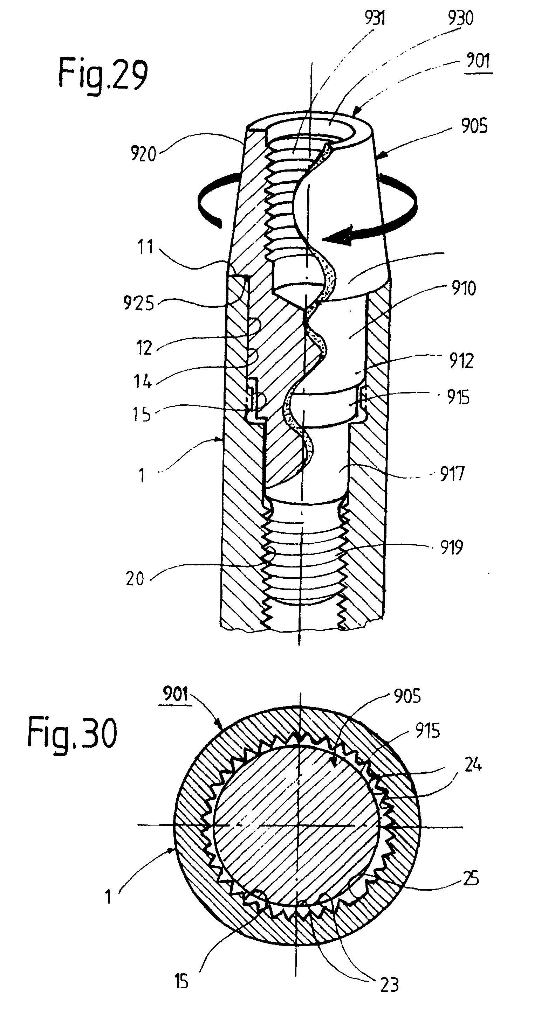

Die in Fig. 28 dargestellte Vorrichtung 881 besitzt ein Implantat 101, eine Schraube 601 und einen Sekundärteil 891. Dieser ist zum Teil ähnlich zu dem in Fig. 13 dargestellten Sekundärteil 451, aber gerade und für die Einzelpositionierung im Implantat 101 ausgebildet. Die Vorrichtung 881 ist in Fig. 28 in einem Zustand gezeichnet, in welchem die Schraube 601 noch nicht in das Innengewinde 120 des Implantats eingeschraubt, der Sekundärteil jedoch schon positioniert ist.

Die in den Figuren 29 und 30 dargestellte Vorrichtung 901 besitzt ein Implantat 1 und einen einstückigen Sekundärteil 905 mit einem Innen- bzw. Verbindungsabschnitt 910. Dieser besitzt von oben nach unten der Reihe nach drei stufenweise dünner werdende zylindrische Abschnitte 912, 915, 917 und ein Aussengewinde 919. Der zylindrische Abschnitt 912 sitzt mit höchstens kleinem radialem Spiel im zylindrischen Hauptabschnitt 14 des Sacklochs 12 des Implantats. Der zylindrische Abschnitt 915 befindet sich im Höhenbereich des Positionierungsabschnitts 15 des Implantats und hat einen Durchmesser, der höchstens gleich dem Durchmesser des durch die Scheitel der Positionierungsvorsprünge 23 des Implantats definierten Zylinders ist und vorzugsweise kleiner als dieser Durchmesser ist. Das Aussengewinde 919 ist in das Innengewinde 20 des Implantats eingeschraubt. Der Sekundärteil 905 hat ferner einen Aussen- bzw. Kopfabschnitt 920, eine Schulter 925 und ein axiales Sackloch 930 mit einem Innengewinde 931. Der Sekundärteil 905 besitzt also keinen in den Positionierungsabschnitt 15 des Implantats eingreifenden Abschnitt und kann zum Einschrauben des Sekundärteil-Aussengewindes 919 in das Implantat-Innengewinde 20 nun die Achse des Implantats gedreht werden, bis die Schulter 925 des Sekundärteils auf der Implantatschulter 11 aufliegt und der Sekundärteil fest mit dem Implantat verbunden ist. Die Vorrichtung 901 kann beispielsweise verwendet werden, wenn das Implantat im interforaminalen Bereich des Unterkiefers eingesetzt wird.

Soweit vorgängig nichts anderes geschrieben wurde, können die anhand der Figuren 21 bis 30 beschriebenen Vorrichtungen ähnlich zusammengebaut werden wie die in den Figuren 18 bis 20 dargestellte Vorrichtung und haben ähnliche Eigenschaften wie diese.

Man kann noch Merkmale von verschiedenen beschriebenen Implantaten miteinander kombinieren und beispielsweise beim in Fig. 6 gezeichneten Implantat 101 den Positionierungsabschnitt analog wie beim in Fig. 5 ersichtlichen Implantat 71 am oberen Ende des Sacklochs 112 oder im mittleren Höhenbereich des konischen Hauptabschnitts des Sacklochs anordnen. Desgleichen kann man Merkmale von verschiedenen beschriebenen Sekundärteilen miteinander kombinieren. Man kann zum Beispiel auch für das Implantat 101 gemäss Fig. 6 einen Sekundärteil herstellen, der analog wie der in den Figuren 29, 30 ersichtliche Sekundärteil 905 ohne Positionierung in das Implantat 101 eingeschraubt werden kann. Zudem kann man die beschriebenen Implantate, Sekundärteile und Befestigungselemente noch in anderen Weisen miteinander zu Vorrichtungen bzw. Verbindungsanordnungen kombinieren sowie verbinden.

Des weiteren kann man einen Sekundärteil oder speziellen Aufbauteil am Implantat befestigen, der einen sich im Sackloch befindenden Innen- bzw. Verbindungsabschnitt aufweist und nicht in das Sackloch des Implantats eingeschraubt, sondern in dieses Sackloch und beispielsweise auch in dessen Innengewinde einzementiert und/oder eingeklebt wird. Der Sekundärteil oder Aufbauteil kann zudem einen pfeilerartigen Aussenabschnitt aufweisen, der nicht auf der Implantatschulter aufliegt. Ferner kann man eine Krone oder dergleichen am pfeilerartigen Aussenabschnitt befestigen, etwa anzementieren und/oder ankleben. Diese Krone kann dann mit einer Auflagefläche spaltfrei auf der Implantatschulter aufliegen und eine Aussenfläche haben, die fugenlos, stufenlos und einigermassen glatt sowie stetig an die Mantelund/oder Aussenfläche des Implantats anschliesst.

## Patentansprüche

1. Dentalimplantat mit einer Achse (2, 32, 72, 108) und einem zu dieser koaxialen Loch (12, 52, 82, 112) zum Befestigen eines Sekundär- und/oder Aufbauteils, (201, 251, 301, 351, 401, 451, 905), wobei das Loch (12, 52, 82, 112) einen Positionierungsabschnitt (15, 55, 85, 115) mit um die Achse (2, 32, 72, 108) herum abwechselnd aufeinanderfolgenden Vorsprüngen (23, 63) und Zwischenräumen (24, 25, 64, 65) aufweist, **dadurch gekennzeichnet, dass** die Zwischenräume (24, 25, 64, 65) mehrere erste, gleich bemessene Zwischenräume (24, 64) und einen zweiten Zwischenraum (25, 65) aufweisen, der in mindestens einer Richtung eine grössere Abmessung hat als die ersten Zwischenräume (24, 64).

2. Implantat nach Anspruch 1, **dadurch gekennzeichnet, dass** der zweite Zwischenraum (25, 65) eine grössere Breite und/oder eine grössere Tiefe hat als die ersten Zwischenräume (24, 64), wobei die Breite tangential zu einem zur Achse (2, 32, 72, 108) koxialen, sich an den Positionierungsabschnitt (15, 55, 85, 115) anschmiegenden Kreis (27) ist.

3. Implantat nach Anspruch 2, **dadurch gekennzeichnet, dass** die ersten Zwischenräume (24, 64) auf dem Kreis eine Teilung definieren und der zweite Zwischenraum (25, 65) eine entlang dem Kreis (27) gemessene Abmessung hat, die gleich der Summe von einer entlang dem Teilkreis gemssenen Abmessung eines ersten Zwischenraums (24, 64) und von einer ganzen Teilung oder von mehreren ganzen Teilungen ist.

4. Implantat nach einem der Ansprüche 1 bis 3, **dadurch gekennzeichnet, dass** die die Vorsprünge (23, 63) Scheitel aufweisen, dass die letzteren eine sich an diese anschmiegende Zylinderfläche definieren, dass jeder Zwischenraum (24, 25, 64, 65) mindestens zum Teil durch Flächenabschnitte begrenzt ist, die ungefähr parallel zu einer radial zur Achse (2, 32, 72, 102) durch die Mitte des Zwischenraums (24, 25, 64, 65) verlaufenden Geraden sind oder mit einer solchen Geraden einen Winkel von höchstens 60° und vorzugsweise höchstens 45° bilden, wobei jeder Zwischenraum (24, 25, 64, 65) vorzugsweise zwei im wesentlichen ebene, zur Achse (2, 32, 72, 102) parallele Seitenflächen hat.

5. Implantat nach einem der Ansprüche 1 bis 4, **dadurch gekennzeichnet, dass** das Loch (12, 52, 82, 112) eine Mündung (13, 53, 83, 113) und ein Innengewinde (20, 60, 90, 120) zum lösbaren Befestigen des Sekundär- und/oder Aufbauteils (201, 251, 301, 351, 401, 451, 501, 891) hat und dass der Positionierungsabschnitt (15, 55, 85, 115) zwischen der Mündung (13, 83, 113) und dem Innengewinde (20, 60, 90, 120) des Lochs (12, 52, 82, 112) angeordnet ist, wobei das Loch (12, 52, 82, 112) beispielsweise noch einen zylindrischen oder konischen Hauptabschnitt (14, 54, 84, 114) zum Zentrieren des Sekundär- und/oder Aufbauteils (201, 251, 301, 351, 401, 451, 501, 891) aufweist und wobei der Hauptabschnitt (14, 54, 84, 114) zum Beispiel zwischen dem Positionierungsabschnitt (15, 55, 115) und der Mündung (13, 113) oder zwischen dem Positionierungsabschnitt (85) und dem Innengewinde (90) angeordnet ist.

6. Vorrichtung mit einem Dentalimplantat (1, 31, 71, 101) nach einem der Ansprüche 1 bis 5 und mit einem Sekundärund/oder Aufbauteil (201, 251, 301, 401, 451, 501, 891, 905), **dadurch gekennzeichnet, dass** der letztere einen zum Hineinragen in das Loch (12, 52, 82, 112) des Implantats (1, 31, 71, 101) bestimmten und in diesem befestigbaren Verbindungsabschnitt (210, 260, 310, 360, 410, 460, 910) besitzt.

7. Vorrichtung nach Anspruch 6, **dadurch gekennzeichnet, dass** der Sekundär- und/oder Aufbauteil (201, 251, 301, 401, 451, 501, 822, 891) mindestens einen Vorsprung (245, 275, 276) zum Eingreifen in einen Zwischenraum (24, 25, 64, 65) des Implantats (1, 31, 71, 101) aufweist und dadurch in mindestens einer Drehstellung bezüglich der Achse (2, 32, 72, 102) positionierbar und gegen Drehungen um die letztere sicherbar ist, dass ein separates Befestigungselement zum lösbaren Befestigen des Sekundär- und/oder Aufbauteils (201, 251, 301, 401, 451, 501, 891) am Implantat (1, 31, 71, 101) vorhanden ist und dass das Befestigungselement ein in ein Innengewinde (20, 60, 90, 120) des Lochs (12, 52, 82, 112) einschraubbares Aussengewinde (608, 705, 755) besitzt, wobei das Befestigungselement zum Beispiel durch eine Schraube (601) mit einem Kopf (603) oder durch einen Bolzen (701, 751) mit einem in ein Innengewinde (433, 824) des Sekundärund/oder Aufbauteils (401, 822) einschraubbaren Aussengewinde (703, 753) gebildet ist.

8. Vorrichtung nach Anspruch 7, **dadurch gekennzeichnet, dass** der Sekundär und/oder Aufbauteil (201, 301) mehrere Vorsprünge (215) aufweist, die alle gleich bemessen und derart verteilt sind, dass der Sekundär- und/oder Aufbauteil (201, 301) bezüglich der Achse (2, 32, 72, 102) in verschiedenen Drehstellungen vom Implantat (1, 31, 71, 101) positionierbar ist.

9. Vorrichtung nach Anspruch 6, **dadurch gekennzeichnet, dass** der Sekundär- und/oder Aufbauteil (251) einen Vorsprung (276) aufweist, der derart ausgebildet und bemessen ist, dass er in den zweiten Zwischenraum (25, 65), nicht aber in einen der ersten Zwischenräume (24, 64) des Implantats (1, 31, 71, 101) eingreifen kann, so dass der Sekundär- und/oder Aufbauteil (251) bezüglich der Achse (2, 32, 72, 102) nur in einer einzigen Drehstellung vom Implantat (1, 31, 1, 101) positionierbar ist, wobei der Sekundär- und/oder Aufbauteil (251) beispielsweise noch mindestens einen anderen Vorsprung (275) aufweist, der bei am Implantat (1, 31, 71, 101) befestigtem Sekundär- und/oder Aufbauteil (25) in einen ersten Zwischenraum (24, 64) des Implantats (1, 31, 71, 101) eingreift.

10. Vorrichtung nach einem der Ansprüche 7 bis 9, **dadurch gekennzeichnet, dass** der Sekundär- und/oder Aufbauteil (201, 251, 301, 351, 451, 891) ein Ende (212), ein in dieses mündendes Loch (230, 330) mit einer Einschnürung (237) und Einschnitte (240) aufweist, die einen das genannte Ende (212) und die Einschnürung (237) bildenden Abschnitt des Sekundärund/oder Aufbauteils (201, 251, 301, 351, 401, 451, 501, 891) in federnde, voneinander wegspreizbare Zungen (241) unterteilen, und dass das Befestigungselement einen Teil aufweist, der vom genannten Ende (212) des Sekundär- und/oder Aufbauteils (201, 251, 301, 351, 401, 451, 501, 891) her unter eine vorübergehenden Spreizung der Zungen (241) in das Loch (230, 330) des Sekundär- und/oder Aufbauteils (201, 251, 301, 351, 401, 451, 501, 891) einführbar und dann in diesem begrenzt axial verschiebbar sowie drehbar gehalten ist und bei am Implantat (1, 31, 71, 101) befestigtem Sekundär- und/oder Aufbauteil (201, 251, 301, 351, 401, 451, 501, 891) an der Einschnürung (237) anliegt.

11. Vorrichtung nach Anspruch 6, **dadurch gekennzeichnet, dass** der Sekundär- und/oder Aufbauteil (905) derart ausgebildet ist, dass er in am Implantat (1, 31, 71, 101) befestigten Zustand nicht in dessen Zwischenräume (24, 25, 64, 65) eingreift.

## Claims

1. Dental implant with an axis (2, 32, 72, 108) and a coaxial hole (12, 52, 82, 112) for fixing a secondary and/or superstructural part (201, 251, 301, 351, 401, 451, 905), wherein the hole (12, 52, 82, 112) having a positioning section (15, 55, 85, 115) with projections (23, 63) and interstices (24, 25, 64, 65) distributed alternately and in sequence around the axis (2, 32, 72, 108), **characterized in that** the interstices (24, 25, 64, 65) have several first interstices (24, 64) of equal size and one second interstice (25, 65), which has a larger dimension in at least one direction than the first interstices (24, 64).

2. Implant according to claim 1, **characterized in that** the second interstice (25, 65) has a width greater and/or depth greater than the first interstices (24, 64), with the width tangential to a circle (27) coaxial to the axis (2, 32, 72, 108) contiguous with the positioning section (15, 55, 85, 115).

3. Implant according to claim 2, **characterized in that** the first interstices (24, 64) on the circle define a division and the second interstice (25, 65) has a dimension measured along the circle (27) equal to the sum of a dimension measured along the pitch circle of a first interstice (24, 64) and of a whole division or several whole divisions.

4. Implant according to one of the claims 1 to 3, **characterized in that** the projections (23, 63) have apexes, that the latter define a cylindrical surface contiguous with them, that every interstice (24, 25, 64, 65) is limited at least partly by surface sections, which are roughly parallel to a straight line running radially to the axis (2, 32, 72, 102) through the centre of the interstice (24, 25, 64, 65) or form an angle of maximum 60° and preferably maximum 45° with a straight line of this kind, with every interstice (24, 25, 64, 65) preferably having two basically planar lateral surfaces parallel to the axis (2, 32, 72, 102).

5. Implant according to one of the claims 1 to 4, **characterized in that** the hole (12, 52, 82, 112) has an outlet (13, 53, 83, 113) and an internal thread (20, 60, 90, 120) for detachable fixing of the secondary and/or superstructural part (201, 251, 301, 351, 401, 451, 501, 891) and that the positioning section (15, 55, 85, 115) is arranged between the outlet (13, 83, 113) and the internal thread (20, 60, 90, 120) of the hole (12, 52, 82, 112), with the hole (12, 52, 82, 112) also having for example a cylindrical or conical primary section (14, 54, 84, 114) for centering the secondary and/or superstructural part (201, 251, 301, 351, 401, 451, 501, 891) and with the primary section (14, 54, 84, 114) arranged for example between the positioning section (15, 55, 115) and the outlet (13, 113) or between the positioning section (85) and the internal thread (90).

6. Device with a dental implant (1, 31, 71, 101) according to one of the claims 1 to 5 and with a secondary and/or superstructural part (201, 251, 301, 401, 451, 501, 891, 905), **characterized in that** the latter has a connecting section (210, 260, 310, 360, 410, 460, 910) intended for extending into the hole (12, 52, 82, 112) of the implant (1, 31, 71, 101) and for fixing in this.

7. Device according to claim 6, **characterized in that** the secondary and/or superstructural part (201, 251, 301, 401, 451, 501, 822, 891) has at least one projection (245, 275, 276) for meshing with an interstice (24, 25, 64, 65) of the implant (1, 31, 71, 101) which enables it to be positioned in at least one rotary position with respect to the axis (2, 32, 72, 102) and can be secured against rotation about the latter, that a separate fixing element is present on the implant (1, 31, 71, 101) for detachable fixing of the secondary and/or super-structural part (201, 251, 301, 401, 451, 501, 891) and that the fixing element has an external thread (608, 705, 755) for screwing into an internal thread (20, 60, 90, 120) of the hole (12, 52, 82, 112), with the fixing element provided with an external thread (703, 753) for screwing into the internal thread (433, 824) of the secondary and/or superstructural part (401, 822) for example by a screw (601) with a head (603) or by a bolt (701, 751).

8. Device according to claim 7, **characterized in that** the secondary and/or superstructural part (201, 301) has several projections (215), which are all of equal size and distributed so that the secondary and/or superstructural part (201, 301) can be positioned with respect to the axis (2, 32, 72, 102) in various rotary positions of the implant (1, 31, 71, 101).

9. Device according to claim 6, **characterized in that** the secondary and/or superstructural part (251) has a projection (276) configured and dimensioned, so that it can engage in the second interstice (25, 65) but not in one of the first interstices (24, 64) of the implant (1, 31, 71, 101), so that the secondary and/or superstructural part (251) can only be positioned in one rotary position of the implant (1, 31, 71, 101) with respect to the axis (2, 32, 72, 102), with the secondary and/or superstructural part (251) for example still having at least one other projection (275), which engages in a first interstice (24, 64) of the implant (1, 31, 71, 101) in the secondary and/or superstructural part (25) fixed in the implant (1, 31, 71, 101).

10. Device according to one of the claims 7 to 9, **characterized in that** the secondary and/or superstructural part (201, 251, 301, 351, 451, 891) has an end (212), a hole (230, 330) opening into this with a constriction (237) and incisions (240) dividing the section of the secondary and/or super-structural part (201, 251, 301, 351, 451, 501, 891) configured by the said end (212) and the constriction (237) in resilient tongues (241) which can be mutually spread apart, and that the fastening element has a part, which can be inserted from the said end (212) of the secondary and/or superstructural part (201, 251, 301, 351, 401, 451, 501, 891) under a momentary spreading of the tongues (241) in the hole (230, 330) of the secondary and/or superstructural part (201, 251, 301, 351, 401, 451, 501, 891) and is then held in this with axially restricted and rotary displacement and lies against the constriction on the secondary and/or superstructural part (201, 251, 301, 351, 401, 451, 501, 891) fixed to the implant (1, 31, 71, 101).

11. Device according to claim 6, **characterized in that** the secondary and/or superstructural part (905) is configured so that when fixed in the implant (1, 31, 71, 101) it does not engage in its interstices (24, 25, 64, 65).

## Revendications

1. Implant dentaire avec un axe (2, 32, 72, 108) et un trou coaxial à celui-ci (12, 52, 82, 112) pour la fixation d'une partie secondaire et/ou appliquée, (201, 251, 301, 351, 401, 451, 905), le trou (12, 52, 82, 112) présentant une section de positionnement (15, 55, 85, 115) avec des saillies (23, 63) et des espaces intermédiaires (24, 25, 64, 65) se suivant alternativement autour de l'axe (2, 32, 72, 108), **caractérisé par le fait que** les espaces intermédiaires (24, 25, 64, 65) présentent plusieurs premiers espaces intermédiaires (24, 64) de même dimension et un deuxième espace intermédiaire (25, 65), qui possède dans au moins une direction une dimension plus grande que les premiers espaces intermédiaires (24, 64).

2. Implant selon la revendication 1, **caractérisé par le fait que** le deuxième espace intermédiaire (25, 65) possède une plus grande largeur et/ou une plus grande profondeur que les premiers espaces intermédiaires (24, 64), la largeur étant tangentielle à un cercle (27) entourant coaxialement par rapport à l'axe (2, 32, 72, 108) la section de positionnement (15, 55, 85, 115).

3. Implant selon la revendication 2, **caractérisé par le fait que** les premiers espaces intermédiaires (24, 64) définissent sur le cercle une division et que le deuxième espace intermédiaire (25, 65) possède une dimension mesurée le long du cercle (27) qui est égale à la somme d'une dimension mesurée le long du cercle de division d'un premier espace intermédiaire (24, 64) et d'une division entière ou de plusieurs divisions entières.

4. Implant selon une des revendications 1 à 3, **caractérisé par le fait que** les saillies (23, 63) présentent des sommets, que ces derniers définissent une surface cylindrique qui les entoure, que chaque espace intermédiaire (24, 25, 64, 65) est limité au moins en partie par des sections de surface qui sont approximativement parallèles à une droite se développant radialement par rapport à l'axe (2, 32, 72, 102) par le milieu de l'espace intermédiaire (24, 25, 64, 65) ou qui forment avec une telle droite un angle de 60° au plus et de préférence de 45° au plus, chaque espace intermédiaire (24, 25, 64, 65) possédant par rapport de préférence deux surfaces latérales de préférence planes parallèles à l'axe (2, 32, 72, 102).

5. Implant selon une des revendications 1 à 4, **caractérisé par le fait que** le trou (12, 52, 82, 112) possède une embouchure (13, 53, 83, 113) et un taraudage (20, 60, 90, 120) pour la fixation démontable de la partie secondaire et/ou appliquées (201, 251, 301, 351, 401, 451, 501, 891) et que la section de positionnement (15, 55, 85, 115) est disposée entre l'embouchure (13, 83, 113) et le taraudage (20, 60, 90, 120) du trou (12, 52, 82, 112), le trou (12, 52, 82, 112) présentant par exemple encore une section principale cylindrique ou conique (14, 54, 84, 114) pour le centrage de la partie secondaire et/ou appliquées (201, 251, 301, 351, 401, 451, 501, 891) et la section principale (14, 54, 84, 114) étant disposée par exemple entre la section de positionnement (15, 55, 115) et l'embouchure (13, 113) ou entre la section de positionnement (85) et le taraudage (90).

6. Dispositif avec un implant dentaire (1, 31, 71, 101) selon une des revendications 1 à 5 et avec une partie secondaire et/ou appliquée (201, 251, 301, 401, 451, 501, 891, 905), **caractérisé par le fait que** ce dernier possède une section de liaison (210, 260, 310, 360, 410, 460, 910) pour se prolonger et se fixer dans le trou (12, 52, 82, 112) de l'implant (1, 31, 71, 101).

7. Dispositif selon la revendication 6, **caractérisé par le fait que** la partie secondaire et/ou appliquée (201, 251, 301, 401, 451, 501, 822, 891) présente au moins une saillie (245, 275, 276) pour faire prise dans un espace intermédiaire (24, 25, 64, 65) de l'implant (1, 31, 71, 101) et puisse ainsi être positionné dans au moins une position de rotation par rapport à l'axe (2, 32, 72, 102) et assuré contre des rotations autour de ce dernier, qu'un élément de fixation séparé soit présent pour la fixation démontable de la partie secondaire et/ou appliquée (201, 251, 301, 401, 451, 501, 891) sur l'implant (1, 31, 71, 101) et que l'élément de fixation possède un filetage (608, 705, 755) pouvant se visser dans un taraudage (20, 60, 90, 120) du trou (12, 52, 82, 112), l'élément de fixation pouvant être formé par exemple par une vis (601) avec une tête (603) ou par un goujon (701, 751) avec un filetage (703, 753) se vissant dans un taraudage (433, 824) de la partie secondaire et/ou appliquée (401, 822).

8. Dispositif selon la revendication 7, **caractérisé par le fait que** la partie secondaire et/ou appliquée (201, 301) présente plusieurs saillies (215), qui sont toutes de même dimension et qui sont réparties de telle sorte que la partie secondaire et/ou appliquée (201, 301) puisse être positionnée en différentes positions de rotation de l'implant (1, 31, 71, 101) par rapport à l'axe (2, 32, 72, 102).

9. Dispositif selon la revendication 6, **caractérisé par le fait que** la partie secondaire et/ou appliquée (251) présente une saillie (276), de forme et de dimension telles qu'elle puisse faire prise dans le deuxième espace intermédiaire (25, 65), mais par dans un des premiers espaces intermédiaires (24, 64) de l'implant (1, 31, 71, 101), de telle sorte que la partie secondaire et/ou appliquée (251) ne puisse être positionnée par rapport à l'axe (2, 32, 72, 102) que dans une seule position de rotation de l'implant (1, 31, 1, 101), la partie secondaire et/ou appliquée (251) présentant par exemple encore au moins une autre saillie (275) qui peut faire prise sur la partie secondaire et/ou appliquée (25) fixée à l'implant (1, 31, 71, 101) dans un premier espace intermédiaire (24, 64) de l'implant (1, 31, 71, 101).

10. Dispositif selon une des revendications 7 à 9, **caractérisé par le fait que** la partie secondaire et/ou appliquée (201, 251, 301, 351, 451, 891) présente une extrémité (212), un trou débouchant dans celle-ci (230, 330) avec un étranglement (237) et des encoches (240), qui divisent une section de la partie secondaire et/ou appliquée (201, 251, 301, 351, 401, 451, 501, 891) formant l'extrémité citée (212) et l'étranglement (237) en lames élastiques pouvant s'écarter les unes des autres (241), et que l'élément de fixation présente une partie pouvant être introduite depuis l'extrémité citée (212) de la partie secondaire et/ou appliquée (201, 251, 301, 351, 401, 451, 501, 891) sous un écartement momentané des lames (241) dans le trou (230, 330) de la partie secondaire et/ou appliquée (201, 251, 301, 351, 401, 451, 501, 891) et qui puisse ensuite être maintenu dans celui-ci avec une possibilité limitée de mouvement axial ainsi que rotatif et qui s'appuie sur l'étranglement (237) de la partie secondaire et/ou appliquée (201, 251, 301, 351, 401, 451, 501, 891) fixée à l'implant (1, 31, 71, 101).

11. Dispositif selon la revendication 6, **caractérisé par le fait que** la partie secondaire et/ou appliquée (905) possède une forme telle qu'elle ne puisse pas prendre prise dans ses espaces intermédiaires (24, 25, 64, 65) à l'état fixé à l'implant (1, 31, 71, 101).
